# FASCICULE DE BREVET EUROPEEN

(11) **EP 2 957 086 B1**
(45) Date de publication et mention de la délivrance du brevet: **05.04.2017**
(21) Numéro de dépôt: 14710011.9
(22) Date de dépôt: 14.02.2014
(51) Int. Cl.: H04L 29/06

(54) **PROCÉDÉ DE CRÉATION D'UN PROFIL DANS UN DOMAINE DE SÉCURITÉ D'UN ÉLÉMENT SÉCURISÉ**
VERFAHREN ZUR ERZEUGUNG EINES PROFILS EINER SICHERHEITSDOMÄNE EINES GESICHERTEN ELEMENTS
METHOD FOR CREATING A PROFILE IN A SECURITY DOMAIN OF A SECURED ELEMENT

(30) Priorité: 18.02.2013 FR 1351354
(43) Date de publication de la demande: 23.12.2015
(73) Titulaire: Oberthur Technologies, 92700 Colombes (FR)
(72) Inventeur: DUMOULIN, Jérôme, F-92700 Colombes (FR); MICHEL, Alexis, F-92700 Colombes (FR)
(74) Mandataire: Delumeau, François Guy
(86) Numéro de dépôt international: PCT/FR2014/050306
(87) Numéro de publication internationale: WO 2014/125228

(56) Documents cités:
- WO-A1-2005/076204

## Description

### Arrière-plan de l'invention

La présente invention se situe dans le domaine des terminaux comportant des éléments sécurisés dans lesquels peuvent être installés des profils.

L'invention s'applique en particulier et de façon non limitative aux terminaux dont les éléments sécurisés sont de type eUICC (« embedded UICC (Universal Integrated Circuit Card) ») et en particulier aux téléphones mobiles, aux téléphones intelligents ...

Pour plus de renseignement sur les éléments sécurisés UICC et eUICC, l'homme du métier se rapportera respectivement à la norme ETSI 102.221 et aux spécifications ETSI TS 103 383.

Dans ce document, la notion de « profil » doit être interprétée au sens large à savoir comme un ensemble d'au moins un fichier et/ou de données. Un profil au sens de l'invention peut notamment comprendre au moins un élément parmi :
- un fichier standard tel que défini par les spécifications du 3GPP ou de l'ETSI pour les UICC et leurs applications et notamment par les normes 3GPP 31.102 et ETSI 102.221 ;
- un fichier propriétaire ;
- un fichier de configuration d'un système d'exploitation ;
- une application Java Card et des éléments de personnalisation associés ;
- des données telles que des clefs de protocole de transport, des paramètres d'algorithme d'authentification, ...

Fonctionnellement, dans la plupart des cas notamment, un profil comporte des données en relation avec un service ou avec une application particulière, par exemple une application bancaire de type NFC (Near Field Communication), une application de télécommunication ou une application coopérant avec un serveur distant via un réseau mobile.

Pour des raisons de sécurité, il est usuel et recommandé, afin de cloisonner les différents services offerts par un terminal, d'enregistrer chacun des profils associés dans un domaine de sécurité propre, tel que défini par le document « Global Platform Card Specification 2.2.1 ».

Une solution permettant de créer un nouveau domaine de sécurité dans un élément sécurisé pour y installer un nouveau profil est donc souhaitable.

Le brevet WO 2005/076204 A1 concerne une carte à puce contenant plusieurs domaines de sécurité d'émetteur et un procédé qui permet d'installer plusieurs domaines de sécurité d'émetteur dans une seule carte à puce.

Dans l'état actuel de la technique, le GSMA recommande, pour la création et l'activation d'un nouveau domaine de sécurité, d'utiliser un système comportant un serveur de domaine de sécurité et un domaine de sécurité apte à communiquer avec ce serveur selon un protocole de transport sécurisé, la sécurisation des échanges étant réalisée au moyen d'une clef partagée par ces deux entités.

Certains contextes, et notamment le projet eUICC de la GSMA recommandent d'utiliser des mécanismes de la norme Global Platform et en particulier celui selon lequel le nouveau domaine de sécurité et celui à l'origine de sa création et de son activation (domaines père/fils au sens de la norme) soient isolés l'un de l'autre dès l'activation du domaine fils de sorte que le domaine de sécurité père n'est pas en mesure de charger un nouveau profil dans le domaine de sécurité fils.

Dans certains contextes, et notamment dans le projet eUICC de la GSMA, le nouveau domaine de sécurité ne doit pas être en mesure de décrypter le protocole de transport sécurisé offert par ce serveur de domaine de sécurité.

L'invention vise une solution de chargement d'un nouveau profil dans un domaine de sécurité d'un élément sécurisé compatible avec l'ensemble de ces contraintes.

### Objet et résumé de l'invention

Ainsi, et d'une façon générale, l'invention concerne un procédé de création d'un profil dans un domaine de sécurité cible d'un élément sécurisé comportant un domaine de sécurité privilégié apte à communiquer avec un serveur de domaine de sécurité selon un protocole de transport sécurisé non décryptable par le domaine de sécurité cible.

Ce procédé comporte :
- une étape de réception, par le domaine de sécurité cible, conformément au protocole de transport sécurisé, de données comportant un script d'installation du profil, ce script étant crypté avec au moins une clef connue du domaine de sécurité cible ;
- une étape au cours de laquelle le domaine de sécurité cible transfère les données audit domaine de sécurité privilégié selon le protocole de transport sécurisé ;
- une étape de décryptage du protocole de transport sécurisé par le domaine de sécurité privilégié pour obtenir le script crypté ;
- une étape au cours de laquelle ledit domaine de sécurité privilégié envoie le script crypté au domaine de sécurité cible ;
- une étape de décryptage du script crypté par le domaine de sécurité cible en utilisant la ou les clefs précitées ; et
- une étape d'exécution de ce script par le domaine de sécurité cible pour installer le profil dans ledit domaine de sécurité cible.

Corrélativement, l'invention vise un élément sécurisé comportant :
- un domaine de sécurité cible ; et un
- un domaine de sécurité privilégié apte à communiquer avec un serveur de domaine de sécurité selon un protocole de transport sécurisé non décryptable par le domaine de sécurité cible ; et dans lequel
- le domaine de sécurité cible comporte :
   - des moyens de réception, conformément au protocole de transport sécurisé, de données comportant un script d'installation d'un profil crypté avec au moins une clef connue du domaine de sécurité cible ;
   - des moyens pour transférer ces données au domaine de sécurité privilégié selon le protocole de transport sécurisé ;
- le domaine de sécurité privilégié comporte :
   - des moyens de décryptage du protocole de transport sécurisé pour obtenir le script crypté ;
   - des moyens pour envoyer le script crypté au domaine de sécurité cible ;
- le domaine de sécurité cible comportant :
   - des moyens de décryptage du script crypté en utilisant la ou les clefs précitées ; et
   - des moyens d'exécution du script pour installer le profil dans le domaine de sécurité cible.

Les clefs précitées sont des clefs pouvant notamment être utilisées à des fins de cryptage/décryptage et/ou à des fins d'authentification dans des mécanismes connus en soi de sécurisation cryptographique des échanges.

Par conséquent, selon l'invention, le script d'installation du profil est crypté avec au moins une première clef connue du domaine de sécurité cible, le profil crypté étant lui-même crypté selon le protocole de transport sécurisé décryptable par le domaine de sécurité privilégié.

Dans un mode de réalisation particulier, le procédé de création de profil selon l'invention comporte une étape de création et d'activation du domaine de sécurité cible par le domaine de sécurité privilégié. Cette pratique est conforme aux recommandations de la GSMA rappelées en préambule de ce document.

Préférentiellement, cette étape de création et d'activation du domaine de sécurité comprend l'exécution d'un script par le domaine de sécurité cible pour générer la ou les clefs précitées.

En pratique, cette ou ces clefs sont partagées entre le domaine de sécurité cible et l'entité, par exemple l'opérateur ou le fournisseur de service qui désire installer le profil dans ce domaine de sécurité.

Ainsi, le domaine de sécurité cible et cet opérateur/fournisseur de service peuvent communiquer dès l'activation du domaine de sécurité cible par le domaine de sécurité privilégié.

Dans un mode de réalisation particulier du procédé de création de profil selon l'invention, le domaine de sécurité cible transfère les données comportant le script d'installation crypté au domaine de sécurité privilégié en utilisant une interface GlobalService de la norme Global Platform.

On rappelle que l'interface GlobalService fonctionne selon un mécanisme de type question/réponse dans lequel une première application ayant demandé un service à une deuxième application reprend nécessairement la main après avoir obtenu ce service.

Dans un mode de réalisation particulier du procédé de création de profil selon l'invention, le protocole de transport sécurisé utilisé entre le serveur de domaine de sécurité et le domaine de sécurité privilégié est le protocole SCP80 ou SCP81.

Dans un mode de réalisation particulier du procédé de création de profil selon l'invention, le domaine de sécurité cible prépare une réponse qu'il crypte avec une clef partagée avec l'entité ayant demandé la création du profil (par exemple l'opérateur) puis demande au domaine de sécurité privilégié de chiffrer cette réponse cryptée conformément au protocole de transport sécurisé pour transfert au serveur de domaine de sécurité.

Dans un mode particulier de réalisation de l'invention, les domaines de sécurité cible et privilégié sont conformes à la norme GlobalPlatform Card Spécification 2.2.1.

Dans un mode particulier de réalisation, l'élément sécurisé selon l'invention est constitué par un composant eUICC tel que défini par la norme ETSI 102 221.

Dans un mode particulier de réalisation, l'élément sécurisé selon l'invention est constitué par un circuit intégré.

L'invention vise aussi un terminal incorporant un élément sécurisé tel que mentionné ci-dessus, par exemple un téléphone mobile.

Ce terminal comporte de façon connue des moyens de communication propres pour communiquer avec le serveur de domaine de sécurité. Ces moyens de communication utilisent un protocole connu, par exemple le protocole SMS (Short Message service), le protocole CAT-TP lorsque le protocole de transport sécurisé est le protocole SCP80, ou le protocole HTTP lorsque le protocole de transport sécurisé est le protocole SCP81.

Lorsque le terminal reçoit les données comportant le script crypté d'installation du nouveau profil, il les transmet préférentiellement à l'élément sécurisé selon l'invention au moyen de commandes APDU (Application Protocol Data Unit) et/ou conformément à la norme ISO7816.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, sous forme d'organigramme, les principales étapes d'un procédé de création de profil conforme à un mode particulier de réalisation de l'invention ; et
- la figure 2 représente un élément sécurisé conforme à un mode particulier de réalisation de l'invention, incorporé dans un téléphone mobile.

### Description détaillée de l'invention

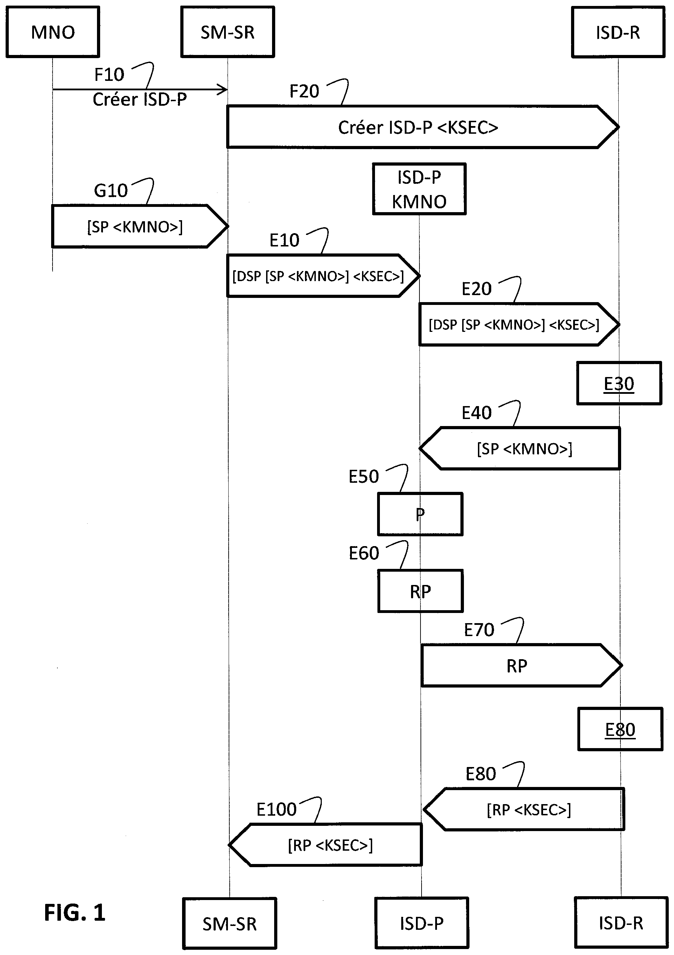

En référence à la figure 1, nous allons maintenant décrire un exemple de mise en oeuvre de l'invention dans lequel un opérateur MNO souhaite installer un nouveau profil P dans un élément sécurisé 10.

Pour que cette opération puisse être réalisée, il est nécessaire, au préalable de créer dans l'élément sécurisé 10 un domaine de sécurité cible réservé à ce nouveau profil P, ce domaine de sécurité cible étant ci-après référencé ISD-P (« Issuer Security Domain - Profile »).

La création du domaine de sécurité cible ISD-P s'effectue, sur demande de l'opérateur MNO (étape F10) de façon connue, au cours d'une étape générale F20, et conformément aux recommandations du GSMA, en utilisant un serveur SM-SR (Subscription Manager Secure Routing) et un domaine de sécurité privilégié de l'élément sécurisé 10 ci-après référencé ISD-R (« Issuer Security Domain - Root »).

Le serveur SM-SR et le domaine de sécurité privilégié ISD-R partagent une ou plusieurs clefs sécurisées KSEC et sont chacun aptes à utiliser ces clefs pour mettre en oeuvre des fonctions de cryptage/décryptage, et/ou des fonctions d'authentification et à communiquer via le réseau mobile selon un protocole de transport sécurisé, par exemple selon le protocole SCP80 (Secure Channel Protocol) ou selon le protocole SCP81.

Le domaine de sécurité privilégié ISD-R est remarquable en ce qu'il a la capacité de créer un nouveau domaine de sécurité sur l'élément sécurisé 10 et éventuellement la capacité de l'activer, sur réception de commandes (ENABLE, DISABLE ...) définies par la GSMA pour le eUICC ou de commandes (DELETE, INSTALL...) conformes à la norme Global Platform, ces commandes étant reçues du serveur SM-SR.

Comme de façon connue, la création de ce nouveau domaine de sécurité cible ISD-P comprend l'exécution d'un script de création de clefs KMNO permettant une communication sécurisée entre l'opérateur MNO et le domaine de sécurité ISD-P.

On rappelle que conformément à la norme Global Platform, le domaine de sécurité privilégié ISD-R ne peut plus accéder aux services du domaine de sécurité cible ISD-P, une fois celui-ci activé, les domaines de sécurité ISD-R et ISD-P étant isolés. Selon une terminologie de cette norme connue de l'homme du métier, on dit aussi que le domaine de sécurité cible ISD-P est extradé.

Nous allons maintenant expliquer comment l'invention permet à l'opérateur MNO de charger le profil P dans le domaine de sécurité cible ISD-P.

Au cours d'une étape G10, l'opérateur MNO envoie au serveur SM-SR un script SP permettant de créer le profil P. Ce script est crypté avec au moins une clef KMNO de l'opérateur MNO.

Au cours d'une étape E10, le serveur SM-SR envoie des données DSP comportant le script SP au domaine de sécurité cible ISD-P en utilisant le protocole de transport sécurisé, à savoir le protocole SCP80 ou SCP81 dans cet exemple. Ces données sont cryptées avec la clef KSEC.

En pratique, ces données comportent une information indiquant qu'elles sont destinées au domaine de sécurité ISD-P cible. Cette information peut notamment être contenue dans un champ champ TAR (Toolkit Application Reference) si le protocole SCP80 est utilisé, ou dans un champ AID (Application IDentifier) si le protocole SCP81 est utilisé.

Le domaine de sécurité cible ISD-P n'offre pas de service permettant de communiquer selon ce protocole de transport sécurisé.

Par conséquent, et conformément à l'invention, le domaine de sécurité cible ISD-P transmet les données DSP au domaine de sécurité privilégié ISD-R au cours d'une étape E20 pour que celui-ci désencapsule le protocole de transport sécurisé. En pratique, pour effectuer ce transfert, le domaine de de sécurité ISD-P invoque un service du domaine de sécurité ISD-R.

Dans le mode de réalisation décrit ici, le domaine de sécurité ISD-P cible transmet les données DSP au domaine de de sécurité privilégié ISD-R en utilisant l'interface GlobalService de la norme Global Platform Card Specification 2.2.

Le domaine de sécurité privilégié ISD-R désencapsule le protocole de transport sécurisé au cours d'une étape E30, cette désencapsulation consistant notamment à décrypter les données reçues et à les authentifier par un mécanisme de vérification de signature.

Le domaine de sécurité privilégié ISD-R envoie le script SP crypté avec la clef KMNO de l'opérateur MNO au domaine de sécurité cible ISD-P au cours d'une étape E40.

Au cours d'une étape E50, le domaine de sécurité cible ISD-P décrypte et authentifie le script SP reçu du domaine de sécurité ISD-R en utilisant les clefs KMNO partagées avec l'opérateur MNO, ces clefs KMNO ayant été créées au moment de la création du domaine de sécurité ISD-P (étape F20). Si les opérations de décryptage et d'authentification se déroulent correctement, le domaine de sécurité cible ISD-P installe le profil P dans ce domaine de sécurité au cours de cette même étape E50.

Au cours d'une étape E60, le domaine de sécurité cible ISD-P prépare une réponse RP destinée au serveur SM-SR pour l'informer du succès ou de l'échec de l'installation du profil P.

Le domaine de sécurité cible ISD-P n'est pas en mesure de communiquer selon le protocole de transport sécurisé avec le serveur SM-SR.

Par conséquent, dans un mode de réalisation particulier, le domaine de sécurité cible IDS-P prépare une réponse RP qu'il crypte avec la clef de l'opérateur KMNO, puis demande au domaine de sécurité privilégié ISD-R de chiffrer cette réponse cryptée pour son transport sécurisé à destination du serveur SM-SR (étape E70).

Dans le mode de réalisation décrit ici, le domaine de sécurité ISD-P cible envoie la réponse RP cryptée au domaine de de sécurité privilégié ISD-R en utilisant l'interface GlobalService de la norme Global Platform Card Specification 2.2.

Le domaine de sécurité privilégié ISD-R crypte la réponse RP au cours d'une étape E80 conformément au protocole de transport sécurisé en utilisant la clef KSEC et envoie la réponse cryptée selon ce protocole au domaine de sécurité cible au cours d'une étape E90.

Le domaine de sécurité cible ISD-P transmet la réponse cryptée au serveur SM-SR au cours d'une étape E100.

Les étapes F10, F20, G10 et E10 à E100 sont exécutées dans cet exemple dans l'ordre dans lequel elles ont été présentées.

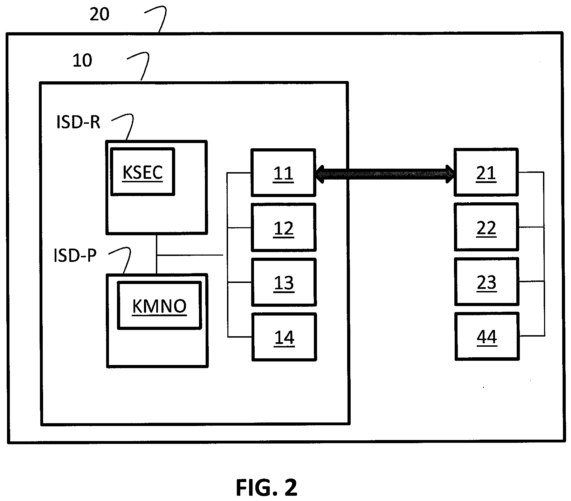

La figure 2 représente un élément sécurisé 10 conforme à l'invention dans un mode particulier de réalisation de l'invention.

Cet élément sécurisé 10 est incorporé dans un téléphone mobile 20 comportant notamment un processeur 21, une mémoire vive 22, une mémoire morte 23 et des moyens 24 de communication sur un réseau mobile. L'élément sécurisé 10 est par exemple constitué par un circuit intégré.

Dans le mode de réalisation décrit ici, les moyens 24 de communication sont adaptés à communiquer avec le serveur de domaine de sécurité SM-SR selon le protocole CAT-TP ou selon le protocole de sécurité HTTP en fonction du protocole de transport sécurisé utilisé SCP 80 ou SCP81.

Dans le mode de réalisation décrit ici, cet élément sécurisé 10 est un composant eUICC tel que défini par la norme ETSI 102 221. Il comporte notamment un processeur 11, une mémoire vive 12, une mémoire morte 13 et des moyens 24 de communication avec le processeur 21 du téléphone mobile.

Le processeur 11 est apte à exécuter les étapes décrites précédemment en référence à la figure 1.

Dans le mode de réalisation décrit ici, le téléphone mobile communique avec l'élément de sécurité 10 au moyen de commandes APDU.

L'élément sécurisé 10 comporte un domaine de sécurité cible ISD-P dans lequel le profil P doit être installé et un domaine de sécurité privilégié ISD-R apte à communiquer avec un serveur de domaine de sécurité SM-SR selon un protocole de transport sécurisé non décryptable par le domaine de sécurité cible ISD-P.

En pratique, le domaine de sécurité privilégié ISD-R connait la ou les clefs de cryptage KSEC et offre des services de communication, de cryptage/décryptage ou/et d'authentification conformes à ce protocole sécurisé, cette clef et ces services n'étant pas connue ou offerts par le domaine de sécurité cible ISD-P.

Le domaine de sécurité cible ISD-P comporte une ou des clefs KMNO partagées avec l'opérateur MNO et des méthodes de cryptage/décryptage et/ou d'authentification utilisant cette ou ces clefs. Ces méthodes sont en particulier adaptées pour décrypter et/ou authentifier le script d'installation du profil P reçu de domaine de sécurité privilégié ISD-R.

Le domaine de sécurité cible ISD-P comporte aussi une méthode apte à exécuter ce pour installer let profil P dans ledit domaine de sécurité cible.

Lorsque le domaine de sécurité cible ISD-P reçoit des données conformément au protocole de transport sécurisé, il invoque automatiquement une méthode du domaine de sécurité privilégié ISD-R pour lui transférer ces données. C'est ainsi qu'il transfert au domaine de sécurité privilégié ISD-R les données DSP comportant le script crypté d'installation du profil P.

Le domaine de sécurité privilégié ISD-R comporte des méthodes permettant de décrypter le protocole de transport avec la clef KSEC, cette méthode étant invoquée pour obtenir le script crypté.

Le domaine de sécurité privilégié ISD-R est apte à invoquer une méthode du domaine de sécurité cible ISD-P pour lui communiquer des données. Il utilise notamment cette méthode pour envoyer le script crypté au domaine de sécurité cible.

## Revendications

1. Procédé de création d'un profil (P) dans un domaine de sécurité cible (ISD-P) d'un élément sécurisé (10) comportant un domaine de sécurité privilégié (ISD-R) apte à communiquer avec un serveur de domaine de sécurité (SM-SR) selon un protocole de transport sécurisé non décryptable par ledit domaine de sécurité cible (ISD-P) ce procédé **caractérisé en ce que**:
- une étape de réception (E10) par ledit domaine de sécurité cible (ISD-P), conformément audit protocole de transport sécurisé, de données (DSP) comportant un script d'installation dudit profil (P) crypté avec au moins une clef (KMNO) connue dudit domaine de sécurité cible (IDS-P) ;
- une étape (E20) au cours de laquelle ledit domaine de sécurité cible (IDS-P) transfère lesdites données (DSP) audit domaine de sécurité privilégié (IDS-R) selon ledit protocole de transport sécurisé ;
- une étape (E30) de décryptage dudit protocole de transport sécurisé par ledit domaine de sécurité privilégié (IDS-R) pour obtenir ledit script crypté ;
- une étape (E40) au cours de laquelle ledit domaine de sécurité privilégié (IDS-R) envoie ledit script crypté audit domaine de sécurité cible (IDS-P) ;
- une étape (E50) de décryptage dudit script crypté par ledit domaine de sécurité cible (ISD-P) en utilisant ladite au moins une clef (KMNO) ; et
- une étape (E50) d'exécution dudit script par ledit domaine de sécurité cible (IDS-P) pour installer ledit profil (P) dans ledit domaine de sécurité cible.

2. Procédé de création de profil (P) selon la revendication 1, **caractérisé en ce que** ledit domaine de sécurité cible (ISD-P) transfère lesdites données (DSP) audit domaine de sécurité privilégié (IDS-R) en utilisant une interface GlobalService de la norme Global Platform.

3. Procédé de création de profil (P) selon la revendication 1 ou 2, **caractérisé en ce que** ledit protocole de transport sécurisé est le protocole SCP80 ou SCP81.

4. Procédé de création de profil (P) selon l'une quelconque des revendications 1 à 3, **caractérisé en ce que** ledit domaine de sécurité cible (ISD-P) envoie (E70) une réponse (RP) audit domaine de sécurité privilégié (ISD-R), cette réponse (RP) étant cryptée (E80) par ledit domaine de sécurité privilégié conformément audit protocole de transport sécurisé, la réponse cryptée étant renvoyée (E90) selon le protocole de transport sécurisé audit domaine de sécurité cible (ISD-P) pour transfert audit serveur (SM-SR).

5. Procédé de création de profil (P) selon l'une quelconque des revendications 1 à 4, **caractérisé en ce qu'**il comporte une étape (F20) de création et d'activation dudit domaine de sécurité cible (ISD-P) par ledit domaine de sécurité privilégié (ISD-R).

6. Procédé de création de profil (P) selon la revendication 5, **caractérisé en ce que** ladite étape (F20) de création et d'activation comprend l'exécution d'un script par ledit domaine de sécurité cible (ISD-P) pour générer ladite au moins une clef (KMNO).

7. Élément sécurisé (10) comportant :
- un domaine de sécurité cible (ISD-P) ; et un
- un domaine de sécurité privilégié (ISD-R) apte à communiquer avec un serveur de domaine de sécurité (SM-SR) selon un protocole de transport sécurisé non décryptable par ledit domaine de sécurité cible (ISD-P) ;
**caractérisé en ce que** :
- ledit domaine de sécurité cible (ISD-P) comporte :
- des moyens de réception, conformément audit protocole de transport sécurisé, de données (DSP) comportant un script d'installation d'un profil (P) crypté avec au moins une clef (KMNO) connue dudit domaine de sécurité cible (IDS-P) ;
- des moyens pour transférer lesdites données (DSP) audit domaine de sécurité privilégié (IDS-R) selon ledit protocole de transport sécurisé ;
- ledit domaine de sécurité privilégié (IDS-R) comporte :
- des moyens de décryptage dudit protocole de transport sécurisé pour obtenir ledit script crypté ;
- des moyens pour envoyer ledit script crypté audit domaine de sécurité cible (IDS-P) ;
- ledit domaine de sécurité cible (ISD-P) comportant :
- des moyens de décryptage dudit script crypté en utilisant ladite au moins une clef (KMNO) ; et
- des moyens d'exécution dudit script pour installer ledit profil (P) dans ledit domaine de sécurité cible.

8. Élément sécurisé (10) selon la revendication 7, **caractérisé en ce que** lesdits domaines de sécurité (ISD-P, ISD-R) sont conformes à la norme GlobalPlatform Card Spécification 2.2.1.

9. Élément sécurisé (10) selon la revendication 7 ou 8 **caractérisé en ce qu'**il est constitué par un composant eUICC tel que défini par la norme ETSI 102 221.

10. Élément sécurisé (10) selon l'une quelconque des revendications 7 à 9 **caractérisé en ce qu'**il est constitué par un circuit intégré.

11. Terminal (20) comportant un élément sécurisé (10) selon l'une quelconque des revendications 7 à 10.

## Patentansprüche

1. Verfahren zur Schaffung eines Profils (P) in einem Zielsicherheitsgebiet (ISD-P) eines gesicherten Elements (10), umfassend ein bevorzugtes Sicherheitsgebiet (ISD-R), das geeignet ist, mit einem Server eines Sicherheitsgebiets (SM-SR) nach einem gesicherten Transportprotokoll zu kommunizieren, das von dem Zielsicherheitsgebiet (ISD-P) nicht entschlüsselt werden kann, wobei dieses Verfahren **gekennzeichnet ist durch**:
- einen Schritt des Empfangens (E10) von Daten (DSP) **durch** das Zielsicherheitsgebiet (ISD-P) nach dem gesicherten Transportprotokoll, umfassend ein Installationsskript des verschlüsselten Profils (P) mit mindestens einem bekannten Schlüssel (KMNO) des Zielsicherheitsgebiets (IDS-P),
- einen Schritt (E20), in dessen Verlauf das Zielsicherheitsgebiet (IDS-P) die Daten (DSP) zum bevorzugten Sicherheitsgebiet (IDS-R) nach dem gesicherten Transportprotokoll transferiert,
- einen Schritt (E30) der Entschlüsselung des gesicherten Transportprotokolls **durch** das bevorzugte Sicherheitsgebiet (IDS-R), um das verschlüsselte Skript zu erhalten,
- einen Schritt (E40), in dessen Verlauf das bevorzugte Sicherheitsgebiet (IDS-R) das verschlüsselte Skript an das Zielsicherheitsgebiet (IDS-P) sendet,
- einen Schritt (E50) der Entschlüsselung des verschlüsselten Skripts durch das Zielsicherheitsgebiet (ISD-P), wobei der mindestens eine Schlüssel (KMNO) verwendet wird, und
- einen Schritt (E50) der Ausführung des Skripts **durch** das Zielsicherheitsgebiet (IDS-P), um das Profil (P) in dem Zielsicherheitsgebiet zu installieren.

2. Verfahren zur Schaffung eines Profils (P) nach Anspruch 1, **dadurch gekennzeichnet, dass** das Zielsicherheitsgebiet (ISD-P) die Daten (DSP) an das bevorzugte Sicherheitsgebiet (IDS-R) transferiert, wobei eine GlobalService-Schnittstelle der Norm Global Platform verwendet wird.

3. Verfahren zur Schaffung eines Profils (P) nach Anspruch 1 oder 2, **dadurch gekennzeichnet, dass** das gesicherte Transportprotokoll das Protokoll SCP80 oder SCP81 ist.

4. Verfahren zur Schaffung eines Profils (P) nach einem der Ansprüche 1 bis 3, **dadurch gekennzeichnet, dass** das Zielsicherheitsgebiet (ISD-P) eine Antwort (RP) an das bevorzugte Sicherheitsgebiet (ISD-R) sendet (E70), wobei diese Antwort (RP) durch das bevorzugte Sicherheitsgebiet nach dem gesicherten Transportprotokoll verschlüsselt ist (E80), wobei die verschlüsselte Antwort nach dem gesicherten Transportprotokoll an das Zielsicherheitsgebiet (ISD-P) für den Transfer zum Server (SM-SR) zurückgesandt wird (E90).

5. Verfahren zur Schaffung eines Profils (P) nach einem der Ansprüche 1 bis 4, **dadurch gekennzeichnet, dass** es einen Schritt (F20) der Schaffung und Aktivierung des Zielsicherheitsgebiets (ISD-P) durch das bevorzugte Sicherheitsgebiet (ISD-R) umfasst.

6. Verfahren zur Schaffung eines Profils (P) nach Anspruch 5, **dadurch gekennzeichnet, dass** der Schritt (F20) der Schaffung und Aktivierung die Ausführung eines Skripts durch das Zielsicherheitsgebiet (ISD-P) umfasst, um den mindestens einen Schlüssel (KMNO) zu erzeugen.

7. Gesichertes Element (10), umfassend:
- ein Zielsicherheitsgebiet (ISD-P) und
- ein bevorzugtes Sicherheitsgebiet (ISD-R), das geeignet ist, mit einem Server eines Sicherheitsgebiets (SM-SR) nach einem gesicherten Transportprotokoll zu kommunizieren, das durch das Zielsicherheitsgebiet (ISD-P) nicht entschlüsselt werden kann, **dadurch gekennzeichnet, dass**:
- das Zielsicherheitsgebiet (ISD-P) umfasst:
- Mittel für den Empfang von Daten (DSP) nach dem gesicherten Transportprotokoll, umfassend ein Installationsskript des verschlüsselten Profils (P), das mit mindestens einem bekannten Schlüssel (DMNO) des Zielsicherheitsgebiets (IDS-P) verschlüsselt ist,
- Mittel, um die Daten (DSP) zum bevorzugten Sicherheitsgebiet (IDS-R) nach dem gesicherten Transportprotokoll zu transferieren,
- wobei das bevorzugte Sicherheitsgebiet (IDS-R) umfasst:
- Mittel zur Entschlüsselung des gesicherten Transportprotokolls, um das verschlüsselte Skript zu erhalten,
- Mittel, um das verschlüsselte Skript an das Zielsicherheitsgebiet (IDS-P) zu senden,
- wobei das Zielsicherheitsgebiet (ISD-P) umfasst:
- Mittel zur Entschlüsselung des verschlüsselten Skripts, wobei der mindestens eine Schlüssel (KMNO) verwendet wird, und
- Mittel zur Ausführung des Skripts, um das Profil (P) in dem Zielsicherheitsgebiet zu installieren.

8. Gesichertes Element (10) nach Anspruch 7, **dadurch gekennzeichnet, dass** die Sicherheitsgebiete (ISD-P, ISD-R) mit der Norm Global Platform Card Specification 2.2.1 konform sind.

9. Gesichertes Element (10) nach Anspruch 7 oder 8, **dadurch gekennzeichnet, dass** es von einer Komponente eUICC, wie durch die Norm ETSI 102 221 definiert, gebildet ist.

10. Gesichertes Element (10) nach einem der Ansprüche 7 bis 9, **dadurch gekennzeichnet, dass** es von einer integrierten Schaltung gebildet ist.

11. Endgerät (20), umfassend ein gesichertes Element (10) nach einem der Ansprüche 7 bis 10.

## Claims

1. A method for creating a profile (P) in a target security domain (ISD-P) of a secure element (10) comprising a privileged security domain (ISD-R) capable of communicating with a security domain server (SM-SR) according to a secure transport protocol not decryptable by said target security domain (ISD-P) this method comprising:
- a reception step (E10) by said target security domain (ISD-P), according to said secure transport protocol, of data (DSP) comprising an installation script of said profile (P) encrypted with at least one key (KMNO) known from said target security domain (IDS-P);
- a step (E20) during which said target security domain (IDS-P) transfers said data (DSP) to said privileged security domain (IDS-R) according to said secure transport protocol;
- a decryption step (E30) of said secure transport protocol by said privileged security domain (IDS-R) to obtain said encrypted script;
- a step (E40) during which said privileged security domain (IDS-R) sends said encrypted script to said target security domain (IDS-P);
- a decryption step (E50) of said encrypted script by said target security domain (ISD-P) by using said at least one key (KMNO); and
- an execution step (E50) of said script by said target security domain (IDS-P) to install said profile (P) in said target security domain.

2. The method for creating a profile (P) according to claim 1, **characterized in that** said target security domain (ISD-P) transfers said data (DSP) to said privileged security domain (IDS-R) by using a GlobalService interface of the Global Platform standard.

3. The method for creating a profile (P) according to claim 1 or 2, **characterized in that** said secure transport protocol is the SCP80 or SCP81 protocol.

4. The method for creating a profile (P) according to any one of claim 1 to 3, **characterized in that** said target security domain (ISD-P) sends (E70) a response (RP) to said privileged security domain (ISD-R), this response (RP) being encrypted (E80) by said privileged security domain according to said secure transport protocol, the encrypted response being sent back (E90) according to the secure transport protocol to said target security domain (ISD-P) for transferring to said server (SM-SR).

5. The method for creating a profile (P) according to any one of claim 1 to 4, **characterized in that** it comprises a step (F20) for creation and activation of said target security domain (ISD-P) by said privileged security domain (ISD-R).

6. The method for creating a profile (P) according to claim 5, **characterized in that** said step (F20) for creation and activation comprises execution of a script by said target security domain (ISD-P) to generate said at least one key (KMNO).

7. A secure element (10) comprising:
- a target security domain (ISD-P); and
- a privileged security domain (ISD-R) capable of communicating with a security domain server (SM-SR) according to a secure transport protocol not decryptable by said target security domain (ISD-P);
**characterized in that**:
- said target security domain (ISD-P) comprises:
- reception means, according to said secure transport protocol, of data (DSP) comprising an installation script of a profile (P) encrypted with at least one key (KMNO) known from said target security domain (IDS-P);
- means for transferring said data (DSP) to said privileged security domain (IDS-R) according to said secure transport protocol;
- said privileged security domain (IDS-R) comprises:
- decryption means of said secure transport protocol to obtain said encrypted script;
- means for sending said encrypted script to said target security domain (IDS-P);
- said target security domain (ISD-P) comprising:
- decryption means of said encrypted script by using said at least one key (KMNO); and
- execution means of said script to install said profile (P) in said target security domain.

8. The secure element (10) according to claim 7, **characterized in that** said security domains (ISD-P, ISD-R) comply with the GlobalPlatform Card Specification 2.2.1 standard.

9. The secure element (10) according to claim 7 or 8 **characterized in that** it consists of an eUICC component such as defined by the ETSI 102 221 standard.

10. The secure element (10) according to any one of claim 7 to 9, **characterized in that** it consists of an integrated circuit.

11. A terminal (20) comprising a secure element (10) according to any one of claim 7 to 10.
